# EUROPEAN PATENT APPLICATION

(11) **EP 4 760 512 A1**
(43) Date of publication of application: **17.06.2026**
(21) Application number: 25841513.2
(22) Date of filing: 02.07.2025
(51) Int. Cl.: G06F 11/3668, G06F 11/30, G06F 9/451, G06F 9/448

(54) **APPARATUS FOR PROVIDING UI AND OPERATION METHOD THEREOF**

(30) Priority: 19.07.2024 KR 20240095554
(71) Applicant: LG Energy Solution, Ltd., Seoul 07335 (KR)
(72) Inventor: KANG, Se Hun, Daejeon 34122 (KR)
(74) Representative: Goddar, Heinz J.
(86) International application number: PCT/KR2025/009390
(87) International publication number: WO 2026/019116

(57) **Abstract**

According to an embodiment disclosed herein, a device may include a user terminal classification unit configured to classify a plurality of user terminals transmitting a service request into a first user terminal corresponding to an existing user interface (UI) and a second user terminal corresponding to a new UI based on a UI distribution criterion and an update unit configured to update the UI distribution criterion based on first interaction information and second interaction information in accordance with respective service requests of the first user terminal and the second user terminal to respective ones of a first UI server in which the existing UI is registered and a second UI server in which the new UI is registered among a plurality of UI servers that provide UIs to the plurality of user terminals.

## Description

### TECHNICAL FIELD

### Cross-reference to Related Applications

This application claims priority from Korean Patent Application No. 10-2024-0095554, filed on July 19, 2024, the disclosure of which is incorporated by reference herein.

### Technical Field

Embodiments disclosed herein relate to a device for providing a user interface (UI) and a method of operating the same.

### BACKGROUND ART

Due to the nature of the UI (User Interface), new features are often added or some of the existing features are removed. When a new UI offers improved usability or the like compared to the existing UI, even users accustomed to the existing UI may quickly adapt to the new UI. On the other hand, when the new UI does not offer improved usability or the like compared to the existing UI, users accustomed to the existing UI may feel a sense of unfamiliarity with the new UI and may not adapt to the new UI. Therefore, it is essential to monitor user adaptability to the new UI.

However, in the related art, monitoring user adaptability to a new UI has relied on methods such as surveys or similar methods, resulting in a problem in that excessive time is required. In addition, in the related art, a person in charge of distributing a UI aggregates user survey results, determines whether to distribute a new UI, and then manually distributes the new UI to a web server accordingly, resulting in a problem in that it takes a considerable amount of time for the new UI to be distributed.

### DISCLOSURE OF THE INVENTION

### TECHNICAL PROBLEM

An object of the embodiments disclosed herein is to provide a device for automatically providing an optimal user interface (UI) and a method of operating the same.

An object of the embodiments disclosed herein is to provide a device for automatically determining an optimal UI among an existing UI and a new UI and a method of operating the same.

An object of the embodiments disclosed herein is to provide a device for reducing the time required to monitor a UI and a method of operating the same.

The technical objectives of the embodiments disclosed herein are not limited to those mentioned above, and other technical objectives not mentioned will be clearly understood by those skilled in the art from the following descriptions.

### TECHNICAL SOLUTION

According to an aspect of the present invention, there is provided a device including a user terminal classification unit configured to classify a plurality of user terminals transmitting a service request into a first user terminal corresponding to an existing user interface (UI) and a second user terminal corresponding to a new UI based on a UI distribution criterion and an update unit configured to update the UI distribution criterion based on first interaction information and second interaction information in accordance with respective service requests of the first user terminal and the second user terminal to respective ones of a first UI server in which the existing UI is registered and a second UI server in which the new UI is registered among a plurality of UI servers that provide UIs to the plurality of user terminals.

In the device according to an embodiment disclosed herein, the update unit may obtain a first UI score and a second UI score respectively corresponding to the existing UI and the new UI based on the first interaction information and the second interaction information, respectively, and update the UI distribution criterion based on a result of comparing the first UI score with the second UI score.

In the device according to an embodiment disclosed herein, the user terminal classification unit may classify the plurality of user terminals into the first user terminal and the second user terminal based on a UI distribution ratio for transmitting the service request to one of the first UI server and the second UI server.

In the device according to an embodiment disclosed herein, when the first UI score is less than the second UI score, the update unit may reduce a first UI distribution ratio corresponding to the existing UI and increase a second UI distribution ratio corresponding to the new UI, among the UI distribution ratios.

The device according to an embodiment disclosed herein may further include a UI registration unit configured to register the existing UI in the first UI server and register the new UI in the second UI server, among the plurality of UI servers.

In the device according to an embodiment disclosed herein, the UI registration unit may change the UI registered in at least some of the first UI servers to the new UI when at least some of conditions that the first UI distribution ratio is less than or equal to a first threshold and that the second UI distribution ratio is greater than or equal to a second threshold are satisfied.

In the device according to an embodiment disclosed herein, the update unit may be configured to obtain a first_1 UI score to a first_n UI score based on first_1 interaction information to first_n interaction information corresponding to a first time period to an nth time period, respectively, obtain a second_1 UI score to a second_n UI score based on second_1 interaction information to second_n interaction information corresponding to the first time period to the nth time period, respectively, and update the UI distribution criterion based on a result of comparing the first_1 UI score to the first_n UI score with the second_1 UI score to the second_n UI score, respectively.

In the device according to an embodiment disclosed herein, the update unit may be configured to obtain a first_1 weighted score to a first_n weighted score by applying a first time period weight to an nth time period weight to the first_1 UI score to the first_n UI score, respectively, obtain a second_1 weighted score to a second_n weighted score by applying the first time period weight to the nth time period weight to the second_1 UI score to the second_n UI score, respectively, and update the UI distribution criterion based on a result of comparing the first_1 weighted score to the first_n weighted score with the second_1 weighted score to the second_n weighted score, respectively.

According to another aspect of the present invention, there is provided a method including classifying a plurality of user terminals transmitting a service request into a first user terminal corresponding to an existing UI and a second user terminal corresponding to a new UI based on a UI distribution criterion and updating the UI distribution criterion based on first interaction information and second interaction information in accordance with respective service requests of the first user terminal and the second user terminal to respective ones of a first UI server in which the existing UI is registered and a second UI server in which the new UI is registered.

In the method of operating the device according to an embodiment disclosed herein, the updating of the UI distribution criterion may include obtaining a first UI score and a second UI score respectively corresponding to the existing UI and the new UI based on the first interaction information and the second interaction information, respectively and updating the UI distribution criterion based on a result of comparing the first UI score with the second UI score.

In the method of operating the device according to an embodiment disclosed herein, in the classifying of the user terminals into the first user terminal and the second user terminal, the plurality of user terminals may be classified into the first user terminal and the second user terminal based on a UI distribution ratio for transmitting the service request to one of the first UI server and the second UI server.

In the method of operating the device according to an embodiment disclosed herein, in the updating of the UI distribution criterion, when the first UI score is less than the second UI score, a first UI distribution ratio corresponding to the existing UI may be reduced and a second UI distribution ratio corresponding to the new UI may be increased, among the UI distribution ratios.

In the method of operating the device according to an embodiment disclosed herein, after the updating the UI distribution criterion, the UI registered in at least some of the first UI servers may be changed to the new UI when at least some of conditions that the first UI distribution ratio is less than or equal to a first threshold and that the second UI distribution ratio is greater than or equal to a second threshold are satisfied.

In the method of operating the device according to an embodiment disclosed herein, the updating of the UI distribution criterion may include obtaining a first_1 UI score to a first_n UI score based on first_1 interaction information to first_n interaction information corresponding to a first time period to an nth time period, respectively, obtaining a second_1 UI score to a second_n UI score based on second_1 interaction information to second_n interaction information corresponding to the first time period to the nth time period, respectively, and updating the UI distribution criterion based on a result of comparing the first_1 UI score to the first_n UI score with the second_1 UI score to the second_n UI score, respectively.

In the method of operating the device according to an embodiment disclosed herein, the updating of the UI distribution criterion may include obtaining a first_1 weighted score to a first_n weighted score by applying a first time period weight to an nth time period weight to the first_1 UI score to the first_n UI score, respectively, obtaining a second_1 weighted score to a second_n weighted score by applying the first time period weight to the nth time period weight to the second_1 UI score to the second_n UI score, respectively, and updating the UI distribution criterion based on a result of comparing the first_1 weighted score to the first_n weighted score with the second_1 weighted score to the second_n weighted score, respectively.

### ADVANTAGEOUS EFFECTS

A device according to the embodiments disclosed herein and a method of operating the same can automatically provide an optimal UI.

A device according to the embodiments disclosed herein and a method of operating the same can automatically determine an optimal UI among an existing UI and a new UI.

A device according to the embodiments disclosed herein and a method of operating the same can reduce the time required to monitor a UI.

Besides, various effects may be provided that are directly or indirectly identified through the present disclosure.

### BRIEF DESCRIPTION OF THE DRAWINGS

FIG. 1 is a diagram for describing a device according to an embodiment disclosed herein.
FIG. 2 is a diagram showing an example of the operation of the device according to an embodiment disclosed herein.
FIG. 3 is a flowchart for describing a method of operating the device according to an embodiment disclosed herein.
FIG. 4 is a flowchart for describing the method of operating the device according to an embodiment disclosed herein.
FIG. 5 shows a computing system that executes a method of operating a server according to an embodiment disclosed herein.

### MODE FOR CARRYING OUT THE INVENTION

Hereinafter, various embodiments disclosed in the present disclosure will be described with reference to the accompanying drawings. However, this is not intended to limit the present invention to the specific embodiments, and it is to be construed to include various modifications, equivalents, and/or alternatives of embodiments of the present invention.

Herein, it is to be understood that a singular form of a noun corresponding to an item may include one or more of the things, unless the relevant context clearly indicates otherwise. As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

Each of the components described herein (e.g., a module or program) may contain a single entity or a plurality of entities. According to various embodiments, one or more of the components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As used herein, the term "module" or "unit" may include a unit implemented in hardware, software, or firmware, and may interchangeably be used with other terms, such as "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) or an application including one or more instructions that are stored in a storage medium (e.g., a memory) that is readable by a machine. For example, a processor of the machine may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

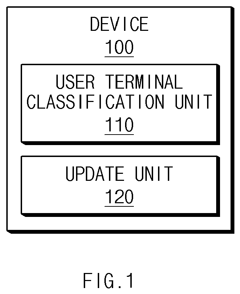

FIG. 1 is a diagram showing an example of a configuration of a device according to an embodiment disclosed herein.

Referring to FIG. 1, a device 100 may include a user terminal classification unit 110 and an update unit 120. However, the device is not limited thereto, and some components may be omitted from the device 100, and other general-purpose components may be further included in the device 100. For example, the device may further include a plurality of user interface (UI) servers 130_1, 130_2, ..., and 130_n. In addition, the device 100 may further include a UI registration unit (not illustrated).

The plurality of UI servers 130_1, 130_2, ..., and 130_n according to an embodiment disclosed herein may be servers that provide a UI to a plurality of user terminals 200_1, 200_2, ..., and 200_n that transmit service requests. For example, the plurality of UI servers 130_1, 130_2, ..., and 130_n may be a plurality of web servers.

The user terminal classification unit 110 according to an embodiment disclosed herein may classify a plurality of user terminals 200_1, 200_2, ..., and 200_n into a first user terminal corresponding to an existing UI and a second user terminal corresponding to a new UI based on a UI distribution criterion. For example, among 100 user terminals, the user terminal classification unit 110 may classify 80 user terminals as first user terminals that receive the existing UI, and classify 20 user terminals as second user terminals that receive the new UI, based on the UI distribution criterion. For example, upon receipt of a service request obtained from any of the plurality of user terminals 200_1, 200_2, ..., and 200_n, the user terminal classification unit 110 may determine, based on the UI distribution criterion, to which one of a UI server providing the existing UI (that is, a first UI server to be described below) and a UI server providing the new UI (that is, a second UI server to be described below) the service request is to be forwarded.

According to an embodiment, the user terminal classification unit 110 may be a load balancer.

According to an embodiment, the UI distribution criterion may be set based on the traffic limit that a plurality of UI servers 130_1, 130_2, ..., and 130_n may handle. For example, when the traffic limit that may be handled by the plurality of UI servers 130_1, 130_2, ..., and 130_n is 100 units of traffic, the user terminal classification unit 110 may allow the user terminal (first user terminal) that transmits a service request corresponding to 80 units of traffic to be provided with the existing UI, and allow a user terminal (second user terminal) that transmits a service request corresponding to 20 units of traffic to be provided with the new UI. For example, the user terminal classification unit 110 may preferentially forward the service request obtained from the user terminal (second user terminal) to the second UI server providing a new UI until traffic reaches 20 units, and then forward the service request obtained from the remaining user terminal (first user terminal) to the first UI server providing an existing UI. That is, the UI distribution criterion may be a criterion corresponding to which UI to provide to each of the plurality of user terminals 200_1, 200_2, ..., and 200_n.

According to an embodiment, the user terminal classification unit 110 may classify a plurality of user terminals 200_1, 200_2, ..., and 200_n into first user terminals and second user terminals based on a UI distribution ratio for transmitting a service request to one of the first UI server and the second UI server. For example, when the UI distribution ratio is 0.7, among 100 user terminals, the user terminal classification unit 110 may classify 70 user terminals as first user terminals receiving the existing UI, classify 30 user terminals as second user terminals receiving the new UI, and then forward the service requests obtained from the first user terminals to the first UI server and forward the service requests obtained from the second user terminals to the second UI server.

The update unit 120 according to an embodiment disclosed herein may update the UI distribution criterion based on first interaction information and second interaction information in accordance with respective service requests of the first user terminal and the second user terminal to respective ones of a first UI server where the existing UI is registered and a second UI server where the new UI is registered, among the plurality of UI servers 130_1, 130_2, ..., and 130_n.

In this case, the interaction information may be information corresponding to an operation performed by the user terminal on a specific UI (the existing UI or new UI). For example, interaction information may include information about a point in time at which a user terminal performed a selecting (clicking) operation on the specific UI. For example, the first interaction information may include information about a point in time at which the first user terminal performs a clicking operation on the existing UI, and the second interaction information may include information about a point in time at which the second user terminal performs a clicking operation on the new UI.

According to an embodiment, the update unit 120 may obtain a first UI score and a second UI score respectively corresponding to the existing UI and the new UI based on the first interaction information and the second interaction information, respectively, and update the UI distribution criterion based on a result of comparing the first UI score with the second UI score.

According to an embodiment, the update unit 120 may obtain a time interval between click points in time of the user terminal on the specific UI based on the interaction information (e.g., the click points in time), and may obtain a specific UI score based on the time interval between the click points in time.

For example, the update unit 120 may obtain the time interval between click points in time of the user terminal on the existing UI based on the first interaction information (e.g., click points in time) and obtain the first UI score based on the time interval between click points in time. For example, the update unit 120 may obtain the time interval between click points in time of the user terminal on the new UI based on the second interaction information (e.g., click points in time) and obtain the second UI score based on the time interval between click points in time.

For reference, the time interval between click points in time for the specific UI may be an average value of the time intervals between a plurality of click points in time, but is not limited thereto. For example, a median value of the intervals between a plurality of click points in time may be the time interval between click points in time for the specific UI.

According to an embodiment, the specific UI score may be inversely proportional to the time interval between click points in time on the specific UI. For example, when the time interval between click points in time is long, the specific UI score may be small, and when the time interval between click points in time is long, the specific UI score may be large. For another example, the specific UI score may be proportional to a click rate on the specific UI. For example, the click rate may be a value obtained by dividing the number of clicks performed by a specific user terminal on the specific UI by the time spent using the specific UI.

For example, when the time interval between click points in time according to the first interaction information is longer than the time interval between click points in time according to the second interaction information, the first UI score may be less than the second UI score. For example, when the time interval between click points in time according to the first interaction information is shorter than the time interval between click points in time according to the second interaction information, the second UI score may be less than the first UI score.

According to an embodiment, when the first UI score is less than the second UI score, the update unit 120 may reduce a first UI distribution ratio corresponding to the existing UI and increase a second UI distribution ratio corresponding to the new UI, among the UI distribution ratios. For example, in a state where the UI distribution criterion is set such that the first UI distribution ratio is 0.8 and the second UI distribution ratio is 0.2, when the first UI score is lower than the second UI score, the first UI distribution ratio may be reduced to 0.6 and the second UI distribution ratio may be increased to 0.4.

According to an embodiment, the update unit 120 may obtain the time interval between click points in time or the click rate based on interaction information for each time period, and obtain the UI score based on the time interval and the click rate. For example, the time interval may be set on a daily basis.

According to an embodiment, the update unit 120 may obtain a first_1 UI score to a first_n UI score based on first_1 interaction information to first_n interaction information corresponding to first to nth time periods, respectively. In addition, the update unit 120 may obtain a second_1 UI score to a second_n UI score based on second_1 interaction information to second_n interaction information corresponding to the first to nth time periods, respectively. In addition, the update unit 120 may update the UI distribution criterion based on a result of comparing the first_1 UI score to the first_n UI score with the second_1 UI score to the second_n UI score, respectively.

For example, by repeating a process of obtaining the first_1 UI score and the second_1 UI score, respectively, based on the first_1 interaction information and the second_1 interaction information corresponding to May 1, 2024, and obtaining the first_2 UI score and the second_2 UI score, respectively, based on first_2 interaction information and the second_2 interaction information corresponding to May 2, 2024, the update unit 120 may obtain the first_1 UI score to the first_n UI score and the second_1 UI score to the second_n UI score. In addition, the update unit 120 may update the UI distribution criterion based on results of comparing the first_1 UI score with the second_1 UI score, comparing the first_2 UI score with the second_2 UI score, ..., and comparing the first_n UI score with the second_n UI score.

As an example, in the case where n is 180, when the second UI scores corresponding to the new UI is higher in 100 time periods as a result of comparing the UI scores corresponding to 180 time periods (that is, 180 days), the update unit 120 may increase the second UI distribution ratio.

As another example, in the case where n is 90, when the first UI scores corresponding to the existing UI are higher as a result of comparing the average value of the first-1 UI score to a first-90 UI score with the average value of the second_1 UI score to the second-90 UI score, the update unit 120 may maintain the second UI distribution ratio or reduce the second UI distribution ratio. For example, the update unit 120 may reduce the second UI distribution ratio to 0, and the UI registration unit, which will be described below, may change/register the UI registered in the second UI server to the existing UI.

According to an embodiment, the update unit 120 may obtain the time interval between click points in time or the click rate based on interaction information for each time period, and obtain the UI score based on the time interval and the click rate, where a weight may be assigned to each of the time periods.

According to an embodiment, the update unit 120 may obtain a first_1 weighted score to a first_n weighted score by applying a first time period weight to an nth time period weight to the first_1 UI score to the first_n UI score, respectively. In addition, the update unit 120 may obtain a second_1 weighted score to a second_n weighted score by applying the first time period weight to the nth time period weight to the second_1 UI score to the second_n UI score, respectively. In addition, the update unit 120 may update the UI distribution criterion based on a result of comparing the first_1 weighted score to the first_n weighted score with the second_1 weighted score to the second_n weighted score, respectively.

According to an embodiment, the update unit 120 may set the time period weight so that a greater weight is assigned to a time period closer to a current point in time.

According to an embodiment disclosed herein, the UI registration unit may register the existing UI to the first UI server among a plurality of UI servers 130_1, 130_2, ..., and 130_n and register the new UI to the second UI server.

According to an embodiment, the UI registration unit may change the UI registered in at least some of the first UI servers to the new UI when at least some of conditions that the first UI distribution ratio is less than or equal to a first threshold and that the second UI distribution ratio is greater than or equal to a second threshold are satisfied. That is, the UI registration unit may change at least some of the first UI servers to function as the second UI servers.

For example, as the update unit 120 updates the UI distribution criterion at least once, when the first UI distribution ratio becomes less than or equal to the first threshold (e.g., 0%) or when the second UI distribution ratio becomes greater than or equal to the second threshold (e.g., 100%), the UI registration unit may change the UI registered in at least some of the first UI servers to the new UI. For reference, the values of the first threshold (0%) and the second threshold (100%) described above are merely examples for illustrative purposes, and the present invention is not limited thereto. For example, the first threshold may be set to 20%, and the second threshold may be set to 90%.

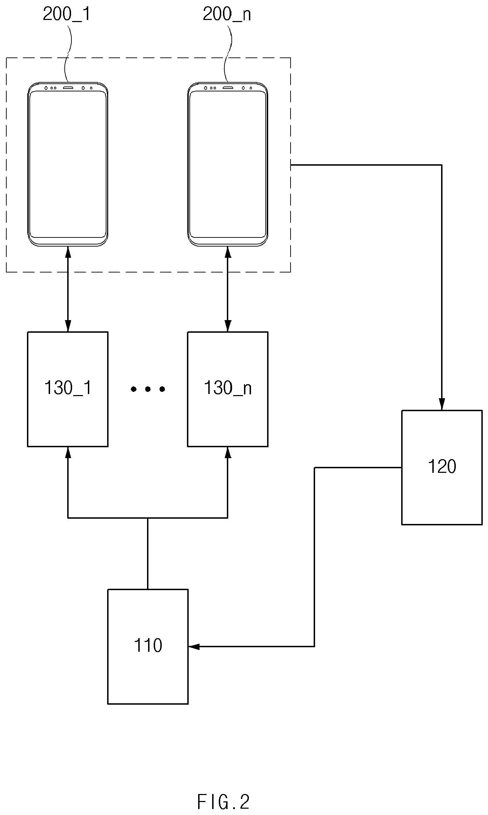

FIG. 2 is a diagram showing an example of the operation of the device 100 according to an embodiment disclosed herein.

Referring to FIG. 2, a state where the existing UI and the new UI are distributed (registered) to at least some of the plurality of UI servers 130_1, 130_2, ..., and 130_n may be shown. For example, the UI server on which the existing UI is distributed may be the first UI server, and the UI server on which the new UI is distributed may be the second UI server.

In addition, the user terminal classification unit 110 may classify the plurality of user terminals 200_1, 200_2, ..., and 200_n into first user terminals and second user terminals based on the UI distribution criterion, and forward the service request of the first user terminals to the first UI servers, and forward the service request of the second user terminals to the second UI servers.

In addition, the UI distribution criterion may be updated based on the first interaction information for the first UI of the first user terminal and the second interaction information for the second UI of the second user terminal.

In this case, when information on click point in time as the first interaction information and the second interaction information is obtained by an obtaining unit (not shown), information on the click rate (or the time interval between click points in time) may be calculated based on the information by the obtaining unit, and may be temporarily stored in a storage (not shown) by being mapped together with the information on the click rate (or the time interval between click points in time) and corresponding UI identification information.

In addition, temporarily stored data may be stored in a container (not shown) on a daily basis, and data identical to data stored in the container may be deleted from the storage.

In addition, an analysis unit (not shown) may analyze data stored in the container (e.g., the click rate) and generate an analysis result such as a median value, an average, a range, or the like, and store the analysis result in the container.

In addition, the update unit 120 may update the UI distribution criterion based on the analysis result (e.g., the UI score). For reference, the obtaining unit, the storage, the container, and the analysis unit are described above as separate components from the update unit 120, but they are not limited thereto, and at least some of the above components may be included in the update unit 120.

In addition, the user terminal classification unit 110 may classify the plurality of user terminals 200_1, 200_2, ..., and 200_n into the first user terminals and the second user terminals based on the updated UI distribution criterion.

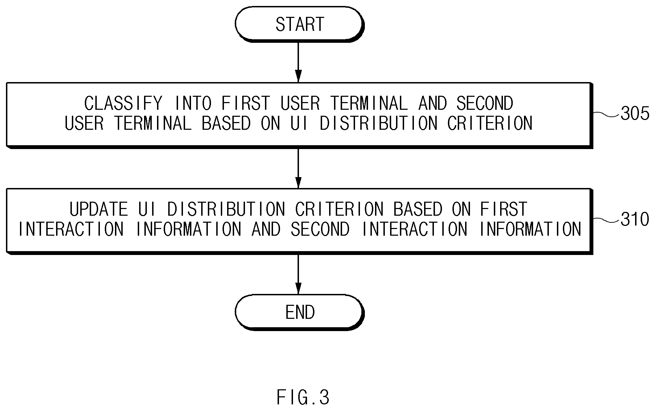

FIG. 3 is a flowchart for describing a method of operating the device 100 according to an embodiment disclosed herein.

Referring to FIG. 3, the method of operating the device 100 may include step 305 of classifying a plurality of user terminals 200-1, 200-2, ..., and 200-n transmitting a service request into a first user terminal corresponding to an existing UI and a second user terminal corresponding to a new UI based on a UI distribution criterion and step 310 of updating the UI distribution criterion based on first interaction information and second interaction information in accordance with respective service requests of the first user terminal and the second user terminal to respective ones of a first UI server in which the existing UI is registered and a second UI server in which the new UI is registered.

At step 305, the device 100 may classify the plurality of user terminals 200_1, 200_2, ..., and 200_n into first user terminals and second user terminals based on a UI distribution ratio for transmitting a service request to one of the first UI server and the second UI server.

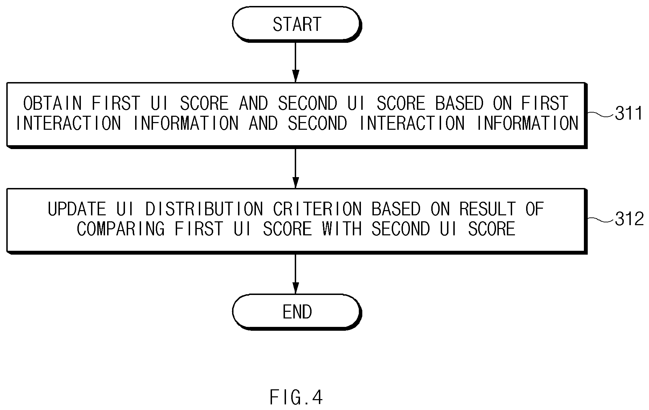

With reference to FIG. 4 in relation to step 310, the method of operating the device 100 may include step 311 of obtaining a first UI score and a second UI score respectively corresponding to the existing UI and the new UI based on the first interaction information and the second interaction information, respectively and step 312 of updating the UI distribution criterion based on a result of comparing the first UI score with the second UI score. In the embodiment, when the first UI score is less than the second UI score, the device may reduce a first UI distribution ratio corresponding to the existing UI and increase a second UI distribution ratio corresponding to the new UI, among the UI distribution ratios. In the embodiment, the device 100 may obtain a first_1 UI score to a first_n UI score based on first_1 interaction information to first_n interaction information corresponding to a first time period to an nth time period, respectively, obtain a second_1 UI score to a second_n UI score based on second_1 interaction information to second_n interaction information corresponding to the first time period to the nth time period, respectively, and update the UI distribution criterion based on a result of comparing the first_1 UI score to the first_n UI score with the second_1 UI score to the second_n UI score, respectively. In the embodiment, the device 100 may obtain a first_1 weighted score to a first_n weighted score by applying a first time period weight to an nth time period weight to the first_1 UI score to the first_n UI score, respectively, obtain a second_1 weighted score to a second_n weighted score by applying the first time period weight to the nth time period weight to the second_1 UI score to the second_n UI score, respectively, and update the UI distribution criterion based on a result of comparing the first_1 weighted score to the first_n weighted score with the second_1 weighted score to the second_n weighted score, respectively.

After step 310, the device 100 may change the UI registered in at least some of the first UI servers to the new UI when at least some of conditions that the first UI distribution ratio is less than or equal to a first threshold and that the second UI distribution ratio is greater than or equal to a second threshold are satisfied.

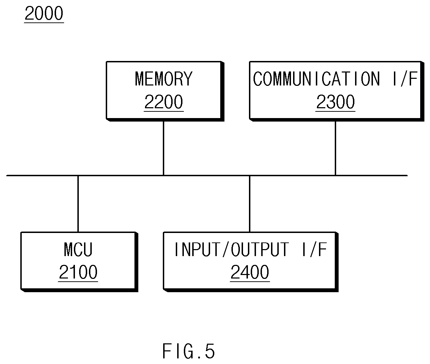

FIG. 5 shows a computing system 2000 that executes a method of operating the device 100 according to an embodiment disclosed herein.

Referring to FIG. 5, the computing system 2000 according to an embodiment disclosed herein may include a microcontroller unit (MCU) 2100, a memory 2200, a communication I/F 2300, and an input/output interface (I/F) 2400.

The MCU 2100 may be a processor that executes various programs stored in the memory 2200 and performs the functions of the device 100 described with reference to FIG. 1 as illustrated above, or a processor that executes the method of operating the device 100 described with reference to FIGS. 3 and 4.

The memory 2200 may store various programs for obtaining the first UI score and the second UI score based on the first interaction information and the second interaction information, respectively, and comparing the UI scores.

A plurality of memories 2200 may be provided as needed. The memory 2200 may be a volatile memory or non-volatile memory. As the volatile memory, the memory 2200 may be a random-access memory (RAM), a dynamic RAM (DRAM), a static RAM (SRAM), or the like. As the non-volatile memory, for the memory 2200, a read-only memory (ROM), a programmable ROM (PROM), an electrically alterable ROM (EAROM), an erasable programmable ROM (EPROM), an electrically erasable programmable ROM (EEPROM), a flash memory, or the like. The examples of memories 2200 listed above are only exemplary and are not limited to the examples.

The input/output I/F 2400 may provide an interface that connects an input device (not shown) such as a keyboard, a mouse, a touch panel, or the like, and an output device such as a display (not shown), to the MCU 2100 to enable data transmission and reception.

The communication I/F 2300 is a component that may transmit and receive various data to and from the server, and may be any device that may support wired or wireless communication. For example, interaction information and the like may be transmitted and received from a separately provided external server through the communication I/F 2300.

In this way, the method of operating the device 100 according to an embodiment disclosed herein may be recorded in the memory 2200 and executed by the MCU 2100.

With the device 100 according to the embodiments disclosed herein and the method of operating the same, it is possible to automatically determine an optimal UI for a user among an existing UI and a new UI, and furthermore, it is possible to automatically and gradually increase the provision ratio of the optimal UI.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

Terms such as "include," "comprise," or "have" described above mean that the corresponding component may be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

## Claims

1. A device comprising:
a user terminal classification unit configured to classify a plurality of user terminals transmitting a service request into a first user terminal corresponding to an existing user interface (UI) and a second user terminal corresponding to a new UI based on a UI distribution criterion; and
an update unit configured to update the UI distribution criterion based on first interaction information and second interaction information in accordance with respective service requests of the first user terminal and the second user terminal to respective ones of a first UI server in which the existing UI is registered and a second UI server in which the new UI is registered among a plurality of UI servers that provide UIs to the plurality of user terminals.

2. The device of claim 1, wherein the update unit obtains a first UI score and a second UI score respectively corresponding to the existing UI and the new UI based on the first interaction information and the second interaction information, respectively, and updates the UI distribution criterion based on a result of comparing the first UI score with the second UI score.

3. The device of claim 2, wherein the user terminal classification unit classifies the plurality of user terminals into the first user terminal and the second user terminal based on a UI distribution ratio for transmitting the service request to one of the first UI server and the second UI server.

4. The device of claim 3, wherein when the first UI score is less than the second UI score, the update unit reduces a first UI distribution ratio corresponding to the existing UI and increases a second UI distribution ratio corresponding to the new UI, among the UI distribution ratios.

5. The device of claim 4, further comprising a UI registration unit configured to register the existing UI in the first UI server and register the new UI in the second UI server, among the plurality of UI servers.

6. The device of claim 5, wherein the UI registration unit changes the UI registered in at least some of the first UI servers to the new UI when at least some of conditions that the first UI distribution ratio is less than or equal to a first threshold and that the second UI distribution ratio is greater than or equal to a second threshold are satisfied.

7. The device of claim 2, wherein the update unit is configured to:
obtain a first_1 UI score to a first_n UI score based on first_1 interaction information to first_n interaction information corresponding to a first time period to an nth time period, respectively;
obtain a second_1 UI score to a second_n UI score based on second_1 interaction information to second_n interaction information corresponding to the first time period to the nth time period, respectively; and
update the UI distribution criterion based on a result of comparing the first_1 UI score to the first_n UI score with the second_1 UI score to the second_n UI score, respectively.

8. The device of claim 7, wherein the update unit is configured to:
obtain a first_1 weighted score to a first_n weighted score by applying a first time period weight to an nth time period weight to the first_1 UI score to the first_n UI score, respectively;
obtain a second_1 weighted score to a second_n weighted score by applying the first time period weight to the nth time period weight to the second_1 UI score to the second_n UI score, respectively; and
update the UI distribution criterion based on a result of comparing the first_1 weighted score to the first_n weighted score with the second_1 weighted score to the second_n weighted score, respectively.

9. A method comprising:
classifying a plurality of user terminals transmitting a service request into a first user terminal corresponding to an existing UI and a second user terminal corresponding to a new UI based on a UI distribution criterion; and
updating the UI distribution criterion based on first interaction information and second interaction information in accordance with respective service requests of the first user terminal and the second user terminal to respective ones of a first UI server in which the existing UI is registered and a second UI server in which the new UI is registered.

10. The method of claim 9, wherein the updating of the UI distribution criterion includes:
obtaining a first UI score and a second UI score respectively corresponding to the existing UI and the new UI based on the first interaction information and the second interaction information, respectively; and
updating the UI distribution criterion based on a result of comparing the first UI score with the second UI score.

11. The method of claim 10, wherein in the classifying of the user terminals into the first user terminal and the second user terminal, the plurality of user terminals are classified into the first user terminal and the second user terminal based on a UI distribution ratio for transmitting the service request to one of the first UI server and the second UI server.

12. The method of claim 11, wherein in the updating of the UI distribution criterion, when the first UI score is less than the second UI score, a first UI distribution ratio corresponding to the existing UI is reduced and a second UI distribution ratio corresponding to the new UI is increased, among the UI distribution ratios.

13. The method of claim 12, wherein after the updating the UI distribution criterion, the UI registered in at least some of the first UI servers is changed to the new UI when at least some of conditions that the first UI distribution ratio is less than or equal to a first threshold and that the second UI distribution ratio is greater than or equal to a second threshold are satisfied.

14. The method of claim 10, wherein the updating of the UI distribution criterion includes:
obtaining a first_1 UI score to a first_n UI score based on first_1 interaction information to first_n interaction information corresponding to a first time period to an nth time period, respectively;
obtaining a second_1 UI score to a second_n UI score based on second_1 interaction information to second_n interaction information corresponding to the first time period to the nth time period, respectively; and
updating the UI distribution criterion based on a result of comparing the first_1 UI score to the first_n UI score with the second_1 UI score to the second_n UI score, respectively.

15. The method of claim 14, wherein the updating of the UI distribution criterion includes:
obtaining a first_1 weighted score to a first_n weighted score by applying a first time period weight to an nth time period weight to the first_1 UI score to the first_n UI score, respectively;
obtaining a second_1 weighted score to a second_n weighted score by applying the first time period weight to the nth time period weight to the second_1 UI score to the second_n UI score, respectively; and
updating the UI distribution criterion based on a result of comparing the first_1 weighted score to the first_n weighted score with the second_1 weighted score to the second_n weighted score, respectively.
